# EUROPEAN PATENT APPLICATION

(11) **EP 2 594 415 A2**
(43) Date of publication of application: **22.05.2013**
(21) Application number: 12192853.5
(22) Date of filing: 15.11.2012
(51) Int. Cl.: B60C 9/00

(54) **Pneumatic tire and method of manufacturing a pneumatic tire**

(30) Priority: 16.11.2011 US 201113297320
(71) Applicant: The Goodyear Tire & Rubber Company, Akron, OH 44316-0001 (US)
(72) Inventor: Lionetti, Robert Edward, L-7227 Bereldange (LU); Jacobs, Gaston, L-7723 Welsdorf (LU)
(74) Representative: Kutsch, Bernd

(57) **Abstract**

A pneumatic tire comprising a component, the component comprising a non-adhesive core structure (100) and at least one wrap cord (110) encircling the core structure is disclosed. The wrap cord (110) provides adhesion to a surrounding matrix. Also, a method of manufacturing a pneumatic tire is disclosed, the method comprises providing green tire component comprising a surface; providing a core structure (100) and at least one wrap cord (110) encircling the core structure (100), the core structure (100) being non-adhesive to the surface; and applying the non-adhesive core structure (100) with the at least one wrap cord (110) encircling the core structure (100) to the surface, the wrap cord (110) providing adhesion to the surface.

## Description

### Field of the Invention

The present invention relates to a pneumatic tire and preferably to a pneumatic tire comprising a component of steel cords wrapped with a tackified textile cord. The invention also relates to a method of manufacturing a pneumatic tire.

### Background of the Invention

A conventional pneumatic tire comprises a carcass ply having a main portion that extends between both bead cores of the tire and turnup portions that are anchored around each bead core. The conventional tire has radially outer edges of the turnup portions of the carcass ply disposed radially outwardly of the bead cores a minimal distance and are in contact with the main portion of the carcass ply. Suitable elastomeric materials surround the bead core, carcass ply, and other elastomeric components to complete the bead portion of the tire. A clamping member comprises a strip of side-by-side cords of a heat shrinkable material embedded in a suitable elastomeric substance having a permanent thermal shrinkage of at least 2 percent. This strip of cords extends from a location radially and axially inward of the bead core to a location radially outward of the bead core and there is no filler strip or apex disposed between the main portion and turnup portion of the carcass ply. The heat shrinkable material may be 1260/2 Nylon 6,6, having a permanent thermal shrinkage of about 4 percent. It is a continual goal in the tire art to simplify the construction and reduce the expense of building tires, yet improve the durability, handling, rolling resistance, and other properties of tires.

Another conventional pneumatic tire has two carcass plies or a single carcass ply reinforced with metallic cords, respectively. Either conventional tire may have a high ending ply turnup and locked bead construction.

Still another pneumatic tire may have a single carcass ply reinforced with parallel metallic cords. A toe guard may have a first end and a second end, each end disposed directly adjacent to the carcass ply.

The use of separate stiffeners or apexes and chafer strips were shown to be used in combination with the plurality of windings of the gum strip used in the toeguard to form the bead portion of the tire. The uses of multiple windings of strip of material wound around the green or uncured tire to form a carcass in cylindrical form may lead to variations in the rubber thicknesses and gauges around the circumference of the tire as it is shaped toroidally and placed in a mold to cure under temperature and pressure.

### Summary of the Invention

The invention relates to a tire in accordance with claim 1 and to a method in accordance with claim 13.

Dependent claims refer to preferred embodiments of the invention.

A pneumatic tire in accordance with a preferred aspect of the present invention includes a pair of axially spaced apart annular bead structures, a carcass structure wrapped around each bead structure and having a pair of carcass turnups substantially contiguous with the carcass structure from the bead structure to radially outer ends of the pair of carcass turnups, a belt structure disposed radially outward of the carcass structure in a crown area of the pneumatic tire, an overlay structure disposed radially outward of the belt structure, and a component comprising a non-adhesive core cord and a wrap cord encircling the core cord with the wrap cord providing adhesion to a surrounding matrix for the reinforcement cord.

According to another preferred aspect of the present invention, the carcass structure includes the component.

According to still another preferred aspect of the present invention, the belt structure includes the component.

According to yet another preferred aspect of the present invention, the overlay structure includes the component.

According to still another preferred aspect of the present invention, the bead structures include the component.

### Definitions

The following definitions are controlling for the disclosed invention.

"Apex" means an elastomeric filler located radially above the bead core and between the plies and the turnup ply.

"Chipper" refers to a narrow band of fabric or steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction.

"Cord" means one of the reinforcement strands a reinforcement structures of a tire may comprise.

"Denier" means the weight in grams per 9000 meters (unit for expressing linear density). Dtex means the weight in grams per 10,000 meters.

"Density" means weight per unit length.

"Flipper" refers to a reinforcing fabric around the bead wire for strength and to tie the bead wire in the tire body.

"Lay length" means the distance at which a twisted filament or strand travels to make a 360 degree rotation about another filament or strand.

"Radial" and "radially" are used to mean directions radially toward or away from the axis of rotation of the tire.

"Toe guard" refers to the circumferentially deployed elastomeric rim-contacting portion of the tire axially inward of each bead.

### Brief Description of the Drawings

The invention will be described by way of example and with reference to the accompanying drawings in which:
FIG. 1 is one half of a schematic cross-sectional view of an example tire in accordance with the present invention.
FIG. 2 is a schematic cross-sectional view of an example cord construction in accordance with the present invention.

### Detailed Description of Example Embodiments of the Present Invention

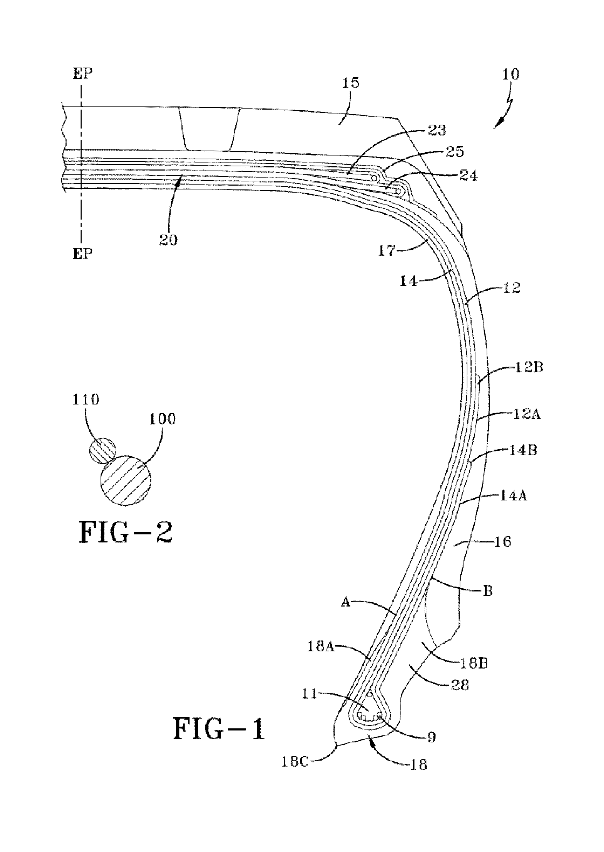

FIG. 1 shows a cross-sectional view of an example tire 10 in accordance with the present invention. The example tire 10 has a pair of bead structures 11 each having a core, each comprising a plurality of metallic filaments. The example tire 10 may be characterized by a first carcass ply 12 and a second carcass ply 14 that extend between the bead cores 11 and turnup portions 12a, 14a anchored around each bead core 11. A belt structure 20 may have at least two belts 23, 24 disposed radially outward of the main portion of the carcass plies 12, 14 and a ground engaging tread portion 15 may be disposed radially outward of the belt structure 20. An overlay ply 25 may be disposed radially outward of the belt structure 20. The bead structures 11 may further include a chafer, a toeguard, a chipper, and/or a flipper.

Sidewall portions 16 extend radially inward from the tread portion 15 to the bead cores 11. On the axially inner side of the carcass ply 14, innerliner 17 is used. The innerliner 17 consists of a layer or layers of elastomer or other material that form an inside surface of the tire 10 for containing inflation fluid, such as air, within the tire. Additional barriers, reinforcement strips, and/or gum strips (not shown) may be disposed at suitable locations between the innerliner 17 and the main portion of the carcass ply 14 to avoid penetration of rubber through the carcass ply 14 during curing.

The belt structure 20 may comprise a plurality of belt plies 23, 24 located radially outward of the carcass plies 12, 14 in a crown portion of the tire 10. The elastomeric tread portion 15 is disposed radially outward of the belt structure 20. The belt structure 20 may have at least two annular layers or plies 23, 24 of parallel cords, woven or unwoven, underlying the tread portion 15, unanchored to the bead cores 11. The belt structure 20 preferably has both left and right cord angles in the range from 40 to 15 degrees with respect to an equatorial plane EP of the tire 10. The belt structure 20 illustrated in FIG. 1 and described herein is an example. For example, in those instances where a larger tire is being constructed for use in a radial light truck application, three or more belts may be used. In addition, cords in the belt plies 23, 24 may be rayon, polyester, glass fiber, aramid, or steel wire. The cords may be steel wire filaments having a tensile strength of at least (-1400 x D + 4050) x 95% when D is the filament diameter in millimeters. Further, the cords may be composed of at least one filament having a tensile strength of at least (-2000 x D + 4050) x 95% when D is as defined above.

The bead cores 11 each comprise a plurality of wraps of a single metallic filament 9. Each of the bead cores 11 may have a circumferential cross-sectional shape, which may be substantially triangular, pentagonal, hexagonal, rectangular, or circular. The metallic filament 9 used in the bead cores 11 may be, for example, a 1.27 mm diameter steel wire coated with bronze to enhance its bonding with rubber. Other filament diameters may also be used.

The cords of the carcass plies 12, 14 may intersect the equatorial plane (EP) of the tire 10 at an angle in the range from 75 to 105 degrees. Further, the cords may intersect at an angle of 82 to 98 degrees or 89 to 91 degrees.

The carcass plies 12, 14 and a toe guard 18 may be folded about each bead core 11. The radially outer edge of each turnup portion 12A, 14A may be in contact with the main portion of the carcass plies 12, 14 and may extend to an end point 12B, 14B 12.7 mm to 101.6 mm radially outward of each bead core 11 from the middle of each bead core. The turnup portions 12a, 14a may extend to an end point 12B, 14B 12.7 mm to 88.9 mm radially outward of each bead core 11. End point 12B may be radially inward (not shown) or radially outward (FIG. 1) of end point 14B. Locking in of the bead cores 11 may be achieved by adhesion between the turnup portions 12A, 14A and the main portion of the carcass plies 12, 14.

Each toe guard 18 has a first-end 18A and a second end 18B. Each end 18A, 18B may be disposed directly adjacent to the carcass ply 14. The first end 18a may be located on the axially inner side of the main portion of the carcass ply 14 at a location 10 mm to 89 mm radially outward of the bead core 11 from substantially the middle of the bead core. Further, the first end 18A may be located on the axially inner side of the main portion of the carcass ply 14 at a location A 10.16 mm to 50.8 mm radially outward of the bead core 11. The second end 18B of the toe guard 18 may be located at a point B ranging from the axially outermost point of the bead core 11 to a location 89 mm radially outward of the bead core from the middle of the bead core. Further, the second end 18B of the toe guard 18 may be located at a point B ranging from the axially outermost point of the bead core 11 to a location B 50.8 mm radially outward of the bead core 11.

The carcass ply turnups 12A, 14A may be folded about the bead core 11 and locked against the main portion of the carcass ply 12 by the sidewall 16. The wrap-around toeguard 18 may be made of a single elastomeric material or composition 28.

As described above, conventional passenger/SUV tires often have a casing/carcass construction that uses two layers of "ply treatment" (e.g., fabric cords embedded in a rubber matrix). Conventional tires typically use the same Denier (cord weight) of a specific type of polyester cord for both layers. For example, a conventional tire may use polyester cord with a Denier of 1500 in both ply layers.

One example ply 12 or 14 may use higher Denier polyester cords (e.g., 1500, 2000) and the other example ply 14 or 12 may use lower Denier polyester cords (e.g., 1000, 1500). The benefits of such a two ply construction may be a reduction in tire weight, a reduction in tire/material cost, a reduction in rolling resistance force, improved tuning of noise-vibration-handling (NVH) performance characteristics, and lower heat generation in the casing structure leading to improved durability and high-speed performance characteristics.

In general, either ply 12, 14 may have a cord with a construction of 900-2500 denier/2 polyester with 7-15/7-15 turns per 2.54 cm (tpi) and 20-35 end per 2.54 cm (epi). Specifically, the radially outer carcass ply 12 may have a cord with a construction of 900-1100 denier/2 polyester with 11-13/11-13 tpi and 14-20 epi; and the radially inner carcass ply 14 may have a cord 110 with a construction of 1400-1600 denier/2 polyester with 8-10/8-10 tpi and 14-20 epi.

An uncoated cord, such as uncoated steelcord, bead wire, or any reinforcement cord structure, has in general no tack and therefore does not adequately stick to a rubber compound when applied. Wrapping the uncoated cord 100 with one or more tackified cords 110 (e.g., two, three, four, five, etc.) serves to exhibit the necessary tack thereby maintaining its position when applied to a rubber compound, such as at a tire building machine.

In accordance with the present invention, any component in the pneumatic tire 10, such as the carcass plies 12, 14, bead structures 11, or the belt plies 23, 24, may utilize a tackified textile wrap cord 110 wrapped about another raw or non-adhesive reinforcement cord structure 100 for enhancing adhesion to the surrounding rubber or polymer matrix (FIG. 2). Such a hybrid steelcord construction may include steel filaments 100 and a tackified textile cord wrap 110. The lay length of the wrap cord 110 is preferably in the range of from 3 mm to 12 mm. The textile cord construction may be any textile reinforcing material that may be tackified, such as nylon, polyester, and/or aramid. The wrap cord 110 may be 70 dtex to 2000 dtex coated with a tackifier such as RFL dip or rubber cement or a sequential combination of both. If needed, the reinforcement cord structure 100 may also so tackified, but preferably it is not.

Conventional steel reinforcements may be coated with rubber through an extrusion or calendering operation before being used to assemble a pneumatic tire. These processes helps to fix the reinforcement density and orientation to match the desired tire design characteristics in a green, or uncured, treatment. This treatment may then be used to assemble the reinforced components of the pneumatic tire during tire building.

Further, a cord construction 100, 110 in accordance with the present invention is directly applied to other rubber components and hold the desired density and orientation. For example, after a layer of coat compound is applied at a building drum, the cord construction 100, 110 may be applied at the desired orientation and density and another coating layer may be applied. Stock preparation steps, such as calendering and extrusion of rubber compound to the wire, may thereby be eliminated. The amount of compound required to coat the cords for adhesion may also be reduced.

As stated above, a component such as a carcass ply 12, 14, a belt ply 23, 24, an overlay 25, and/or a bead core 11 in accordance with the present invention may produce excellent adhesion leading to enhanced cost, weight, and performance characteristics in a pneumatic tire 10. This component thus enhances the performance of the tire pneumatic 10, even though the complexities of the structure and behavior of the pneumatic tire are such that no complete and satisfactory theory has been propounded.

## Claims

1. A pneumatic tire comprising a component, the component comprising a non-adhesive core structure (100) and at least one wrap cord (110) encircling the core structure with the wrap cord (110) providing adhesion to a surrounding matrix.

2. The tire of claim 1 wherein the non-adhesive core structure (100) is a reinforcement cord structure, preferably a raw reinforcement cord structure.

3. The tire of claim 1 or 2 wherein the non-adhesive core structure (100) is a steel cord or a steel filament.

4. The tire of at least one of the previous claims wherein the warp cord (110) is a textile wrap cord.

5. The tire of claim 1 or 4 wherein the warp cord (110) is a tackified wrap cord.

6. The tire of at least one of the previous claims wherein the matrix is a polymer or a rubber compound.

7. The tire of at least one of the previous claims wherein the tire comprises a carcass structure (12), the carcass structure (12) comprising the component.

8. The tire of at least one of the previous claims wherein the tire comprises a belt structure (20), the belt structure (20) comprising the component.

9. The tire of at least one of the previous claims wherein the tire comprises an overlay structure (25), the overlay structure (25) comprising the component.

10. The tire of at least one of the previous claims wherein the tire comprises a bead structure (11), the bead structure (11) comprising the component.

11. The tire of at least one of the previous claims wherein the component includes two or three wrap cords (110).

12. The tire of at least one of the previous claims comprising a pair of axially spaced apart annular bead structures (11), a carcass structure (12) wrapped around each bead structure (11) and having a pair of carcass turnups (12A, 14A) substantially contiguous with the carcass structure (12) from the bead structure (11) to radially outer ends (12B, 14B) of the pair of carcass turnups (12A, 14A), a belt structure (24) disposed radially outwardly of the carcass structure (11) in a crown area of the tire (10), and, optionally, an overlay structure (25) disposed radially outward of the belt structure (24).

13. A method of manufacturing a pneumatic tire, the method comprising:
(i) providing green tire component comprising a surface;
(ii) providing a core structure (100) and at least one wrap cord (110) encircling the core structure (100), the core structure (100) being non-adhesive to the surface;
(iii) applying the non-adhesive core structure (100) with the at least one wrap cord (110) encircling the core structure (100) to the surface, the wrap cord (110) providing adhesion to the surface.

14. The method of claim 13, wherein the surface is a first layer of coat compound and wherein after step (iii) a second layer of coat compound is applied to the surface in such a way that the first and second layer of coat compound provide a matrix surrounding the non-adhesive core structure (100) with the at least one warp cord (110).

15. The method of claim 13 or 14 wherein the non-adhesive core structure (100) with the at least one wrap cord (110) encircling the core structure to the surface is directly applied to the surface at a tire building drum.
